# EUROPEAN PATENT SPECIFICATION

(11) **EP 3 030 766 B1**
(45) Date of publication and mention of the grant of the patent: **04.10.2017**
(21) Application number: 14703106.6
(22) Date of filing: 21.01.2014
(51) Int. Cl.: F01N 3/28

(54) **CATALYTIC CONVERTER**
KATALYSATORUMWANDLER
CONVERTISSEUR CATALYTIQUE

(30) Priority: 06.08.2013 FI 20135814
(43) Date of publication of application: 15.06.2016
(73) Proprietor: Wärtsilä Finland Oy, 65380 Vaasa (FI)
(72) Inventor: LIAVÅG, Lars Ola, FI-65230 Vasa (FI); KINNARI, Pekka, FI-65630 Karperö (FI); DI MICELI, Antonino, FI-65100 Vaasa (FI)
(74) Representative: Berggren Oy, Helsinki & Oulu
(86) International application number: PCT/FI2014/050045
(87) International publication number: WO 2015/018970

(56) References cited:
- WO-A1-2010/078052
- DE-A1-102011 015 512
- US-A1- 2010 223 916
- US-A1- 2013 152 557
- US-B1- 6 315 076

## Description

### Technical field of the invention

The present invention relates to a catalytic converter for selective catalytic reduction in accordance with the preamble of claim 1.

### Background of the invention

Nitrogen oxide (NOₓ) emissions of internal combustion engines in ships and at power plants are a growing concern and subject to continuously tightening regulations set by the International Maritime Organization (IMO) and other legislative bodies. To a certain extent, the requirements set by different regulations can be met by means that are directly related to the operation of the engine, such as exhaust gas recirculation, high fuel injection pressures in diesel engines, water injection into the air intake duct etc. However, many engine-related measures for reducing NOₓ emissions have a negative effect on the fuel efficiency, and they are not adequate for meeting the most stringent emission limits. For ultimate NOₓ reduction, selective catalytic reduction (SCR) is needed. With the SCR, NOₓ reductions of up to 90% or even greater can be achieved.

In an SCR system a catalyst material and a reducing agent are used to decompose the NOₓ that is formed during the combustion. In a typical SCR system, the catalyst is arranged on the surface of a supporting ceramic material that forms a honeycomb structure inside a reactor. On the surface of the catalyst, the NOₓ reacts with ammonia that is used as the reducing agent and nitrogen and water is formed. In practice, urea is often used instead of ammonia for safety reasons. This applies especially to the marine applications, where leaking ammonia is a serious hazard. Urea is injected into the exhaust gas flow in an aqueous solution. Due to the high temperature of the exhaust gas, water evaporates and the urea molecules break up into ammonia and carbon dioxide.

For effective NOₓ reduction and minimized usage of urea, as well as for minimum ammonia slip through the SCR system, effective mixing of the urea with the exhaust gas flow is essential. Also a uniform exhaust gas flow field into the catalyst elements is important for effective functioning of the catalytic converter. In many prior art solutions, sufficient mixing of exhaust gas and urea has been ensured by arranging a relatively long exhaust duct section between the point of urea injection and the catalyst elements. However, this solution is often not practical because of the associated space requirements. Another problem is that the increased thermal efficiency of modern medium- and slow-speed engines leads to low exhaust temperatures. If the catalytic converter is placed far from the engine, low temperature of the exhaust gases may have a negative effect on the functioning of the catalytic converter. By placing the catalytic converter between the turbines of low-pressure and high-pressure turbochargers, sufficiently high exhaust gas temperature can be ensured. However, because of the limited space and high exhaust gas pressure, it is difficult to achieve both a uniform exhaust gas flow field into the catalyst elements and a minimum pressure drop over the catalytic converter at the same time.

Patent application DE 10128548 A1 discloses one prior art exhaust gas cleaning system, which comprises a housing, inside which a catalyst element is arranged. The exhaust gas inlet and outlet are arranged at the same end of the housing. A dividing wall guides the exhaust gas from the inlet end to the other end of the housing, from where the exhaust gas enters the catalyst element. The construction is not optimized for providing a minimum pressure drop and a uniform flow through the catalyst element.

US 6315076 B1 discloses a catalytic converter for cleaning exhaust gas. The catalytic converter is disposed on a dividing wall of a muffler housing for a small engine. The exhaust gas is introduced into the muffler housing from a first end of the housing, the exhaust gas enters the catalytic converter through openings in the dividing wall, and the exhaust gas is discharged from the first end of the muffler housing.

DE 102011015512 A1 discloses an exhaust gas treatment unit. The unit comprises a housing and a tube which is disposed concentrically in the housing. Exhaust gas flows in the tube from a first end of the unit to a second end. A return flow region, where exhaust gas treatment devices are disposed, is arranged between the housing and the tube.

### Summary of the invention

The object of the present invention is to provide an improved catalytic converter, where the above mentioned problems are reduced or avoided. The characterizing features of the catalytic converter according to the invention are given in the characterizing part of claim 1.

The catalytic converter according to the invention comprises a casing having a first end and a second end, an inlet that is arranged at the first end of the casing for introducing exhaust gas into the catalytic converter, an outlet that is arranged at the first end of the casing for discharging the exhaust gas from the catalytic converter, a partition wall extending from the first end of the casing to a distance from the second end for dividing the casing into a first compartment, into which compartment the inlet opens, and a second compartment, into which compartment the outlet opens, and at least one catalyst element, which is arranged in the second compartment. The catalytic converter further comprises a flow distribution element, which covers an end of the second compartment and comprises a plurality of openings, through which openings the exhaust gas is introduced from the first compartment into the second compartment.

The first compartment, through which the exhaust gas flows before being introduced into the catalyst elements, facilitates mixing of exhaust gas and reducing agent. It also makes the uniformity of the exhaust gas flow less dependent on the construction of the exhaust system upstream from the catalytic converter. The catalytic converter according to the invention is compact and helps to minimize the space required by the exhaust system. The flow distribution element helps in achieving a uniform exhaust gas flow into the catalyst elements.

According to the invention, the flow distribution element has a semi-cylindrical shape, of which inner semi-cylindrical surface faces the second compartment. The semi-cylindrical shape makes it possible to maximize the surface area of the flow distribution element, which means that also the cross-sectional area of the openings can be made larger and pressure losses can be minimized.

The openings of the flow distribution element can be, for instance, round holes or elongated slots. Alternatively, the flow distribution element can comprise a plurality of vanes, and the openings are the gaps between the vanes.

According to an embodiment of the invention, the combined cross-sectional area of the openings of the flow distribution element is greater than the cross-sectional area of the first compartment in the flow direction of the exhaust gas. This ensures that the pressure drop over the flow distribution element is kept low. The cross-sectional area of the first compartment in the flow direction of the exhaust gas is preferably greater than the cross-sectional area of the inlet. Pressure losses in the first compartment are thus reduced.

According to an embodiment of the invention, the second end of the catalytic converter has a semi-cylindrical shape, of which inner semi-cylindrical surface faces the inner side of the casing. The shape of the second end thus corresponds the shape of the flow distribution element. Gentle turning of the exhaust flow is thus facilitated and flow separation within the catalytic converter is eliminated.

According to the invention, a transitional zone is formed between the flow distribution element and the second end of the casing, the transitional zone having a decreasing cross-sectional area in the direction from the first compartment towards the second compartment. With the reducing cross-sectional area of the transitional zone, even flow velocities and pressures can be achieved along the entire upstream side of the flow distribution element, thus facilitating an even distribution of the flow through its openings. According to an embodiment of the invention, the depth of the openings of the flow distribution element in the flow direction of the exhaust gas is greater than the shortest dimension of the openings in the plane that is perpendicular to the flow direction of the exhaust gas. This minimizes the lateral momentum of the exhaust gas on the downstream side of the flow distribution element, thus facilitating an even inflow into the first catalytic element.

According to an embodiment of the invention, the first compartment is provided with at least one static mixing device. The catalytic converter can also comprise means for introducing reducing agent into the first compartment. This is made possible by the first compartment, which allows good mixing of exhaust gas and reducing agent.

### Brief description of the drawings

Embodiments of the invention are described below in more detail with reference to the accompanying drawings, in which
Fig. 1 shows a cross-sectional view of a catalytic converter according to an embodiment of the invention,
Fig. 2 shows a cross-sectional view of the catalytic converter of Fig. 1 from another direction,
Fig. 3 shows a side-view of the catalytic converter of Figs. 1 and 2,
Fig. 4 shows a flow distribution element of a catalytic converter according to an embodiment of the invention,
Fig. 5 shows a flow distribution element according to another embodiment of the invention,
Figs. 6 and 7 show a flow distribution element according to still another embodiment of the invention, and
Fig. 8 shows a catalytic converter with means for reducing agent injection.

### Description of embodiments of the invention

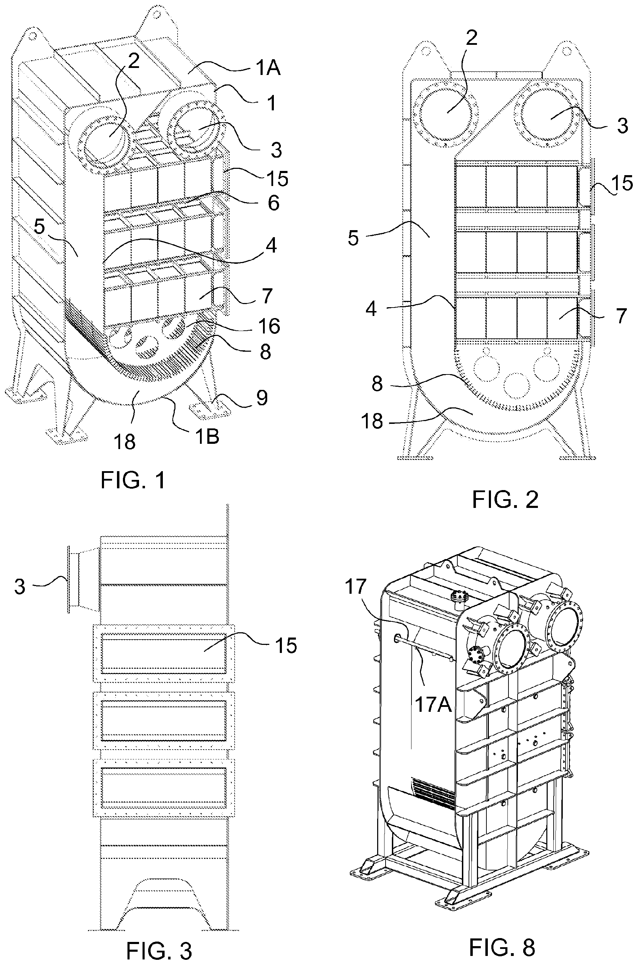

In figures 1 to 3 is shown a catalytic converter according to an embodiment of the invention. The catalytic converter can be used for selective catalytic reduction of NOₓ emissions of large piston engines, such as main or auxiliary engines of ships or power plant engines. The catalytic converter is connected to the exhaust system of an engine, for instance between the turbines of a high-pressure turbocharger and a low-pressure turbocharger. The catalytic converter comprises a casing 1 having a first end 1A and a second end 1B. The casing 1 is made of sheet metal or some other material having similar properties. In the embodiment of the figures, the catalytic converter is arranged in an upright position so that the first end 1A of the casing 1 is the upper end of the catalytic converter and the second end 1B is the lower end. However, the catalytic converter could also be arranged in a horizontal position. The catalytic converter is provided with legs 9 for supporting the device against a mounting surface, such as a turbocharger bracket. The catalytic converter comprises an inlet 2 for introducing exhaust gas into the device and an outlet 3 for discharging the exhaust gas. Both the inlet 2 and the outlet 3 are arranged at the first end 1A of the catalytic converter. In the embodiment of the figures, the inlet 2 and the outlet 3 are on the same side surface of the casing 1. However, the inlet 2 and the outlet 3 could also be on the end surface of the casing 1, on different side surfaces, or one of the openings 2, 3 could be on a side surface and one on the end surface. Since the inlet 2 and the outlet 3 are at the same end, the catalytic converter is easier to integrate with the engine. Also the required number of exhaust duct bends can be reduced in many cases, which reduces pressure losses in the exhaust system.

The catalytic converter is provided with a partition wall 4, which is arranged inside the casing 1. The partition wall 4 extends from the first end 1A of the casing 1 to a distance from the second end 1B. The partition wall 4 divides the catalytic converter into a first compartment 5 and a second compartment 6. In the embodiment of the figures, the partition wall 4 is not straight. Rather, it is bent at the first end 1A of the catalytic converter towards the second compartment 6 to make more room for the inlet 2 of the catalytic converter. The partition wall 4 extends over at least half of the length of the casing 1, preferably at least two thirds of the length of the casing 1. However, the partition wall 4 does not extend to the second end 1B of the casing 1, but the distance between the second end 1B of the casing 1 and the end of the partition wall 4 is at least one tenth of the length of the casing 1. The first and the second compartments 5, 6 are hermetically separated from each other by the partition wall 4 between the first end 1A of the casing 1 and the opposite end of the partition wall 4, but gas flow from the first compartment 5 into the second compartment 6 is allowed at the second end 1B of the casing 1. The inlet 2 of the catalytic converter opens into the first compartment 5 and the outlet 3 opens into the second compartment 6. Exhaust gas is thus introduced first into the first compartment 5, where it flows from the first end 1A of the catalytic converter towards the second end 1B. Close to the second end 1B, the exhaust gas is introduced from the first compartment 5 into the second compartment 6, where it flows towards the first end 1A of the catalytic converter and is finally discharged via the outlet 3.

Reducing agent can be introduced into the exhaust system upstream from the catalytic converter or into the first compartment 5. The first compartment 5 works as an exhaust duct that is integrated into the catalytic converter. When the reducing agent is introduced into the exhaust system upstream from the catalytic converter, mixing of the exhaust gas and the reducing agent continues in the first compartment 5. The length of the exhaust duct before the catalytic converter can thus be reduced and the design of the catalytic converter therefore helps to keep the exhaust system very compact. Figure 8 shows a catalytic converter, where reducing agent is introduced directly into the first compartment 5. Direct injection into the catalytic converter is made possible by the first compartment 5, which provides a sufficient time for evaporation of the reducing agent and mixing of the exhaust gas and the reducing agent. One of the side walls of the catalytic converter has been removed in the figure for showing means 17, 17A for introducing reducing agent into the first compartment 5. The means comprise a feed pipe 17, which is arranged to protrude into the first compartment 5 through the rear wall of casing 1. The feed pipe 17 is provided with at least one nozzle 17A, through which the reducing agent is injected from the feed pipe 17 into the first compartment 5. In the embodiment of figure 8, there are three nozzles 17A, but the number of the nozzles 17A may vary depending on the size of the catalytic converter and the type of the nozzles 17A. The feed pipe 17 could protrude into the first chamber 5 also from a different direction. The catalytic converter could also be provided with more than one feed pipes 17.

The first compartment 5 is dimensioned so that the cross-sectional area in the flow direction of the exhaust gas is larger than the cross-sectional area of the inlet 2 and the exhaust duct. Pressure losses in the first compartment 5 are thus reduced and the first compartment 5 can also be provided with static mixing devices for facilitating mixing of reducing agent and exhaust gas. Because of the first compartment 5, which has a large cross-sectional area and where the exhaust gas flow velocity is moderate, the flow field in the second compartment 6 is only modestly dependent on the design of the exhaust system upstream from the catalytic converter. This gives more freedom in the design of the exhaust system.

The catalytic converter comprises a plurality of catalyst elements 7, which are arranged in the second compartment 6. The catalyst elements 7 comprise catalyst that is arranged on the surface of a supporting ceramic material. On the surface of the catalyst, the NOₓ reacts with ammonia that is contained in the reducing agent and nitrogen and water is formed. The catalyst elements 7 are arranged in several consecutive rows in the flow direction of the exhaust gas. The catalytic converter is provided with maintenance openings 15, which are arranged on a side of the casing 1. Through the maintenance openings 15, the catalyst elements 7 can be removed for servicing or replacement. One maintenance opening 15 is provided for each row of the catalyst elements 7.

According to an embodiment of the invention, the cross-sectional area of the second compartment 6 in the flow direction of the exhaust gas is larger than the cross-sectional area of the first compartment 5. According to an advantageous example, the cross-sectional area of the second compartment 6 in the flow direction of the exhaust gas is at least 50 % larger than the cross-sectional area of the first compartment 5. More preferably, the cross-sectional area of the second compartment 6 is at least twice the cross-sectional area of the first compartment 5. This ensures that the flow speed through the catalyst elements 7 is slow enough, and pressure losses can thus be kept low.

A flow distribution element 8 is arranged to cover the inlet end of the second compartment 6, i.e. the end that is facing the second end 1B of the casing 1. The flow distribution element 8 is a semi-cylindrical part that is provided with a plurality of openings 11, 12, 13. One end of the flow distribution element 8 is attached to the partition wall 4 and the other end is attached to a side wall of the casing 1 of the catalytic converter. The inner semi-cylindrical surface of the flow distribution element 8 faces the second compartment 6. Because of the semi-cylindrical shape of the flow distribution element 8, the surface area of the flow distribution element 8 is much larger than the cross-sectional area of the first compartment 5 in the flow direction of the exhaust gas. Because of the large area, pressure drop over the flow distribution element 8 can be kept low. The number and size of the openings 11, 12, 13 is selected so that the combined cross-sectional area of the openings 11, 12, 13 is larger than the cross-sectional area of the first compartment 5 in the flow direction of the exhaust gas. This reduces pressure losses.

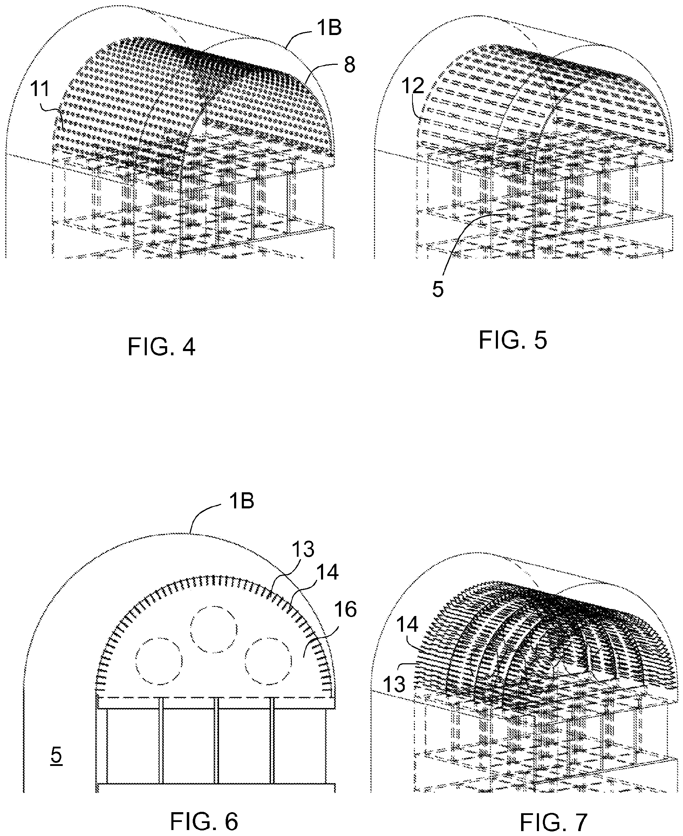

Different possible shapes of the openings 11, 12, 13 are shown in figures 4 to 7. In the embodiment of figure 4, the openings are round holes 11. The holes 11 are arranged in rows, which are distributed evenly around the semi-cylindrical surface of the flow distribution element 8. The flow distribution element 8 is made of a bent plate. The plate can be made, for instance, of sheet metal. In the embodiment of figure 5, the openings are elongated slots 12. Also in this embodiment, the flow distribution element 8 is made of a bent plate. In the embodiment of figures 1-3, 6 and 7, the openings are gaps 13 that are formed between vanes 14 that are used for forming the flow distribution element 8. The vanes 14 are attached to semi-circular supporting plates 16, which are arranged in parallel with the flow direction of the exhaust gas.

The openings 11, 12, 13 are dimensioned so that their aspect ratio is greater than 1. The depth of the opening 11, 12, 13 in the flow direction of the exhaust gas is thus greater than the shortest dimension of the opening 11, 12, 13 in the plane that is perpendicular to the flow direction of the exhaust gas. In the case of round holes 11 this means that the thickness of the plate in which the holes 11 are made is greater than the diameter of the holes 11. In the case of elongated slots 12, the thickness of the plate is greater than the width of the slots 12. In the case of the vanes 14, the width of the vanes 14 is greater than the gap 13 between the vanes 14. Because of the high aspect ratio, the lateral momentum of the exhaust gas on the downstream side of the flow distribution element 8 is minimized, and even inflow into the second compartment 6 is thus facilitated.

The shape of the second end 1B of the casing 1 is semi-cylindrical and corresponds thus the shape of the flow distribution element 8. Gentle turning of the exhaust flow is thus facilitated and flow separation within the catalytic converter is eliminated. A transitional zone 18 is formed between the flow distribution element 8 and the second end 1B of the casing 1. The transitional zone 18 is thus between the first compartment 5 and the second compartment 6 and extends from an imaginary extension of the partition wall 4 to that sidewall of the casing 1, which is on the side of the second compartment 6. The cross-sectional area of the transitional zone 18 in the direction from the first compartment 5 towards the second compartment 6 decreases gradually. At the first end of the transitional zone 18 in the flow direction of the exhaust gas the cross-sectional area is approximately the same as the cross-sectional area of the first compartment 5. At the second end of the transitional zone 18, the cross-sectional area approaches zero. The velocity and pressure of the exhaust gas is nearly constant along the entire surface of the flow distribution element 8. As a consequence, the exhaust gas flow through the distribution element 8 becomes very evenly distributed between the individual openings of the flow distribution element 8. The flow velocity thus becomes relatively even also downstream from the flow distribution element 8, which helps to maintain a uniform flow also through the catalyst elements 7. Except for the second end 1B, the casing 1 of the catalytic converter is essentially rectangular.

It will be appreciated by a person skilled in the art that the invention is not limited to the embodiments described above, but may vary within the scope of the appended claims. For instance, the casing of the catalytic converter could be cylindrical instead of the rectangular shape, in which case the second end of the casing could be hemispherical instead of the semi-cylindrical shape.

## Claims

1. A catalytic converter for selective catalytic reduction, the catalytic converter comprising
- a casing (1) having a first end and (1A) a second end (1B),
- an inlet (2) that is arranged at the first end (1A) of the casing (1) for introducing exhaust gas into the catalytic converter,
- an outlet (3) that is arranged at the first end (1A) of the casing (1) for discharging the exhaust gas from the catalytic converter,
- a partition wall (4) extending from the first end (1A) of the casing (1) to a distance from the second end (1B) for dividing the casing (1) into a first compartment (5), into which compartment (5) the inlet (2) opens, and a second compartment (6), into which compartment (6) the outlet (3) opens,
- at least one catalyst element (7), which is arranged in the second compartment (6), and
- a flow distribution element (8), which covers an end of the second compartment (6) and comprises a plurality of openings (11, 12, 13), through which openings (11, 12, 13) the exhaust gas is introduced from the first compartment (5) into the second compartment (6),
**characterized in that** the flow distribution element (8) has a semi-cylindrical shape, of which inner semi-cylindrical surface faces the second compartment (6) and a transitional zone (18) is formed between the flow distribution element (8) and the second end (1B) of the casing (1), the transitional zone (18) having a decreasing cross-sectional area in the direction from the first compartment (5) towards the second compartment (6).

2. A catalytic converter according to claim 1, **characterized in that** the openings (11, 12, 13) of the flow distribution element (8) are round holes (11).

3. A catalytic converter according to claim 1, **characterized in that** the openings (11, 12, 13) of the flow distribution element (8) are elongated slots (12).

4. A catalytic converter according to claim 1, **characterized in that** the flow distribution element (8) comprises a plurality of vanes (14), and the openings (11, 12, 13) are the gaps (13) between the vanes (14).

5. A catalytic converter according to any of the preceding claims, **characterized in that** the combined cross-sectional area of the openings (11, 12, 13) of the flow distribution element (8) is greater than the cross-sectional area of the first compartment (5) in the flow direction of the exhaust gas.

6. A catalytic converter according to any of the preceding claims, **characterized in that** the second end (1B) of the catalytic converter has a semi-cylindrical shape, of which inner semi-cylindrical surface faces the inner side of the casing (1).

7. A catalytic converter according to any of the preceding claims, **characterized in that** the cross-sectional area of the first compartment (5) in the flow direction of the exhaust gas is greater than the cross-sectional area of the inlet (2).

8. A catalytic converter according to any of the preceding claims, **characterized in that** the depth of the openings (11, 12, 13) of the flow distribution element (8) in the flow direction of the exhaust gas is greater than the shortest dimension of the openings (11, 12, 13) in the plane that is perpendicular to the flow direction of the exhaust gas.

9. A catalytic converter according to any of the preceding claims, **characterized in that** the first compartment (5) is provided with at least one static mixing device.

10. A catalytic converter according to any of the preceding claims, **characterized in that** the catalytic converter comprises means (17, 17A) for introducing reducing agent into the first compartment (5).

## Patentansprüche

1. Katalysator zur selektiven katalytischen Reduktion, wobei der Katalysator Folgendes umfasst:
- ein Gehäuse (1), das ein erstes Ende (1A) und ein zweites Ende (1B) aufweist,
- einen Einlass (2), der an dem ersten Ende (1A) des Gehäuses (1) angeordnet ist, um Abgase in den Katalysator einzuführen,
- einen Auslass (3), der an dem ersten Ende (1A) des Gehäuses (1) angeordnet ist, um die Abgase aus dem Katalysator abzulassen,
- eine Trennwand (4), die sich von dem ersten Ende (1A) des Gehäuses (1) über einen Abstand von dem zweiten Ende (1B) erstreckt, um das Gehäuse (1) in eine erste Kammer (5), wobei der Einlass (2) in diese Kammer (5) mündet, und eine zweite Kammer (6), wobei der Auslass (3) in diese Kammer (6) mündet, zu unterteilen,
- mindestens ein Katalysatorelement (7), das in der zweiten Kammer (6) angeordnet ist, und
- ein Strömungsverteilungselement (8), das ein Ende der zweiten Kammer (6) abdeckt und eine Vielzahl von Öffnungen (11, 12, 13) umfasst, durch welche Öffnungen (11, 12, 13) die Abgase von der ersten Kammer (5) in die zweite Kammer (6) eingeführt werden,
**dadurch gekennzeichnet, dass** das Strömungsverteilungselement (8) eine halbzylindrische Form aufweist, deren innere halbzylindrische Oberfläche der zweiten Kammer (6) gegenübersteht, und eine Übergangszone (18) zwischen dem Strömungsverteilungselement (8) und dem zweiten Ende (1B) des Gehäuses (1) gebildet ist, wobei die Übergangszone (18) eine abnehmende Querschnittsfläche in der Richtung von der ersten Kammer (5) zu der zweiten Kammer (6) aufweist.

2. Katalysator nach Anspruch 1, **dadurch gekennzeichnet, dass** die Öffnungen (11, 12, 13) des Strömungsverteilungselements (8) runde Löcher (11) sind.

3. Katalysator nach Anspruch 1, **dadurch gekennzeichnet, dass** die Öffnungen (11, 12, 13) des Strömungsverteilungselements (8) längliche Schlitze (12) sind.

4. Katalysator nach Anspruch 1, **dadurch gekennzeichnet, dass** das Strömungsverteilungselement (8) eine Vielzahl von Flügeln (14) umfasst und die Öffnungen (11, 12, 13) die Zwischenräume (13) zwischen den Flügeln (14) sind.

5. Katalysator nach einem der vorhergehenden Ansprüche, **dadurch gekennzeichnet, dass** die kombinierte Querschnittsfläche der Öffnungen (11, 12, 13) des Strömungsverteilungselements (8) größer als die Querschnittsfläche der ersten Kammer (5) in der Strömungsrichtung der Abgase ist.

6. Katalysator nach einem der vorhergehenden Ansprüche, **dadurch gekennzeichnet, dass** das zweite Ende (1B) des Katalysators eine halbzylindrische Form aufweist, deren innere halbzylindrische Oberfläche der inneren Seite des Gehäuses (1) gegenübersteht.

7. Katalysator nach einem der vorhergehenden Ansprüche, **dadurch gekennzeichnet, dass** die Querschnittsfläche der ersten Kammer (5) in der Strömungsrichtung der Abgase größer als die Querschnittsfläche des Einlasses (2) ist.

8. Katalysator nach einem der vorhergehenden Ansprüche, **dadurch gekennzeichnet, dass** die Tiefe der Öffnungen (11, 12, 13) des Strömungsverteilungselements (8) in der Strömungsrichtung der Abgase größer als die kürzeste Dimension der Öffnungen (11, 12, 13) in der Ebene ist, die zur Strömungsrichtung der Abgase rechtwinklig ist.

9. Katalysator nach einem der vorhergehenden Ansprüche, **dadurch gekennzeichnet, dass** die erste Kammer (5) mit mindestens einer statischen Mischvorrichtung versehen ist.

10. Katalysator nach einem der vorhergehenden Ansprüche, **dadurch gekennzeichnet, dass** der Katalysator Mittel (17, 17A) umfasst, um ein Reduktionsmittel in die erste Kammer (5) einzuführen.

## Revendications

1. Convertisseur catalytique pour la réduction catalytique sélective, le convertisseur catalytique comprenant :
- un boîtier (1) présentant une première extrémité (1A) et une seconde extrémité (1B),
- une entrée (2) qui est agencée sur la première extrémité (1A) du boîtier (1) pour introduire du gaz d'échappement dans le convertisseur catalytique,
- une sortie (3) qui est agencée sur la première extrémité (1A) du boîtier (1) pour décharger le gaz d'échappement du convertisseur catalytique,
- une paroi de séparation (4) s'étendant de la première extrémité (1A) du boîtier (1) vers une distance de la seconde extrémité (1B) pour diviser le boîtier (1) en un premier compartiment (5), dans lequel premier compartiment (5) l'entrée (2) ouvre, et un second compartiment (6), dans lequel second compartiment (6) la sortie (3) ouvre,
- au moins un élément catalytique (7) qui est agencé dans le second compartiment (6), et
- un élément de distribution d'écoulement (8) qui couvre une extrémité du second compartiment (6) et comprend une pluralité d'ouvertures (11, 12, 13), à travers lesquelles ouvertures (11, 12, 13) le gaz d'échappement est introduit du premier compartiment (5) vers l'intérieur du second compartiment (6),
**caractérisé en ce que** l'élément de distribution d'écoulement (8) présente une forme semi-cylindrique dont la surface semi-cylindrique interne est face au second compartiment (6), et une zone de transition (18) est formée entre l'élément de distribution d'écoulement (8) et la seconde extrémité (1B) du boîtier (1), la zone de transition (18) présentant une aire en section transversale décroissante dans la direction du premier compartiment (5) en vers le second compartiment (6).

2. Convertisseur catalytique selon la revendication 1, **caractérisé en ce que** les ouvertures (11, 12, 13) de l'élément de distribution d'écoulement (8) sont des trous ronds (11).

3. Convertisseur catalytique selon la revendication 1, **caractérisé en ce que** les ouvertures (11, 12, 13) de l'élément de distribution d'écoulement (8) sont des fentes allongées (12).

4. Convertisseur catalytique selon la revendication 1, **caractérisé en ce que** l'élément de distribution d'écoulement (8) comprend une pluralité d'aubes (14), et les ouvertures (11, 12, 13) sont les espaces (13) entre les aubes (14).

5. Convertisseur catalytique selon l'une quelconque des revendications précédentes, **caractérisé en ce que** l'aire en section transversale combinée des ouvertures (11, 12, 13) de l'élément de distribution d'écoulement (8) est supérieure à l'aire en section transversale du premier compartiment (5) dans la direction d'écoulement du gaz d'échappement.

6. Convertisseur catalytique selon l'une quelconque des revendications précédentes, **caractérisé en ce que** la seconde extrémité (1B) du convertisseur catalytique présente une forme semi-cylindrique dont la surface semi-cylindrique interne est face au côté intérieur du boîtier (1).

7. Convertisseur catalytique selon l'une quelconque des revendications précédentes, **caractérisé en ce que** l'aire en section transversale du premier compartiment (5) dans la direction d'écoulement du gaz d'échappement est supérieure à l'aire en section transversale de l'entrée (2).

8. Convertisseur catalytique selon l'une quelconque des revendications précédentes, **caractérisé en ce que** la profondeur des ouvertures (11, 12, 13) de l'élément de distribution d'écoulement (8) dans la direction d'écoulement du gaz d'échappement est supérieure à la dimension la plus courte des ouvertures (11, 12, 13) dans le plan qui est perpendiculaire à la direction d'écoulement du gaz d'échappement.

9. Convertisseur catalytique selon l'une quelconque des revendications précédentes, **caractérisé en ce que** le premier compartiment (5) est doté d'au moins un dispositif de mélange statique.

10. Convertisseur catalytique selon l'une quelconque des revendications précédentes, **caractérisé en ce que** le convertisseur catalytique comprend des moyens (17, 17A) pour introduire un agent réducteur dans l'intérieur du premier compartiment (5).
